# EUROPÄISCHE PATENTSCHRIFT

(11) **EP 0 608 849 B1**
(45) Veröffentlichungstag und Bekanntmachung des Hinweises auf die Patenterteilung: **02.05.1997**
(21) Anmeldenummer: 94101090.2
(22) Anmeldetag: 25.01.1994
(51) Int. Cl.: G01J 1/04, G01J 3/50, G01J 5/60, G01J 5/08

(54) **Vorrichtung zur Erzeugung von mehreren Sekundärlichtstrahlen aus einem Primärlichtstrahl**
Apparatus for generating several secondary light beams from one primary light beam
Appareil pour la production de plusieurs rayons de lumière secondaires à partir d'un rayon de lumière primaire

(30) Priorität: 25.01.1993 LU 88215
(43) Veröffentlichungstag der Anmeldung: 03.08.1994
(73) Patentinhaber: EUROPÄISCHE ATOMGEMEINSCHAFT (EURATOM), L-2920 Luxembourg (LU)
(72) Erfinder: Ronchi, Claudio, D-76689 Neuthard (DE); Heinz, Wilhelm, D-76351 Linkenheim (DE)
(74) Vertreter: Weinmiller, Jürgen, Dipl.-Ing.

(56) Entgegenhaltungen:
- EP-A- 0 420 108
- DE-A- 3 622 075
- US-A- 3 885 878
- US-A- 3 992 110

## Beschreibung

Die Erfindung bezieht sich auf eine Vorrichtung zur Erzeugung von mehreren Sekundärlichtstrahlen aus einem Primärlichtstrahl, insbesondere für ein Mehrwellenlängenpyrometer.

In der Mehrkanalpyrometrie wird die Temperatur aus den relativen Intensitäten der Wärmestrahlung bei verschiedenen Wellenlängen und aus einer generellen Annahme bezüglich der Abhängigkeit der spektralen Emissivität von der Wellenlänge errechnet. Hierbei ergibt sich T unabhängig von der absoluten Intensität der Wärmestrahlung, was besondere Vorteile für Messungen bietet, bei denen das Medium (Atmosphäre und/oder Fenster) nicht vollständig transparent ist und die Emissivität der Meßprobe unbekannt ist.

Auf der anderen Seite ist die Methode durch die hohe Empfindlichkeit der berechneten Temperatur gegenüber Pyrometersignalen begrenzt. Die Hauptfehlerquellen in der Mehrkanalpyrometrie stammen nämlich aus sphärischen und chromatischen Verzerrungen der Objektivlinsen und von deren Ausbreitung durch andere Pyrometerbauteile (Kondensorlinsen, Prismen, Netze und Lichtleitfasern). Die Korrektur derartiger Verzerrungen erfordert teure Komponenten und in den meisten Fällen eine deutliche Verringerung des verwendbaren Fokussierfelds sowie eine sehr genaue Fluchtung zwischen der Probe und dem Pyrometer. Dieses Problem wird besonders schwierig für Messungen niedriger Temperaturen, bei denen praktisch nur Infrarotstrahlung auftritt.

Das Arbeitsprinzip der Mehrkanalpyrometrie beruht auf der gleichzeitigen oder rasch aufeinanderfolgenden Messung von Intensitäten bei verschiedenen Wellenlängen. Es ist also notwendig, aus einem gemeinsamen Primärlichtstrahl mehrere därlichtstrahlen abzuleiten, die gemäß den verschiedenen Wellenlängen ausgewertet werden. Bisher wurden für diese Ableitung von Sekundärlichtstrahlen aus einem Primärlichtstrahl verschiedene Methoden in Betracht gezogen.
a) Halbdurchlässige Spiegel: Jede Veränderung der Fokussierbedingungen führt zu unterschiedlichen Konvergenzveränderungen der Strahlen für die verschiedenen Farben, was die Pyrometermessung verfälscht. Außerdem findet eine Polarisation statt, die sowohl die Gesamtintensität als auch die spektrale Zusammensetzung des reflektierten Lichts verändert. Schließlich müssen die halbdurchlässigen Spiegel in einem mechanisch sehr stabilen Gerüst gehalten werden.
b) Lichtleitfaser-Teilbündel: Selbst bei einer homogenen Mischung der Lichtleiter der einzelnen Bündel auf der Eingangsseite läßt sich eine ungleichmäßige Beleuchtung des Eingangsbündels nicht vermeiden, die mit den Fokusssierbedingungen variiert, und es werden Störfluktuationen der Intensität in den verschiedenen Teilbündeln gemessen. Dieser Effekt nimmt zwar mit zunehmender Anzahl von Fasern in jedem Bündel ab, aber zugleich werden die Fasern damit dünner und bruchgefährdet.
c) Dispersion an einem reflektierenden Gitter: Durch die Fokussierung ergeben sich Veränderungen in der Spektralverteilung. Die gleiche Bemerkung gilt für eine Dispersion an einem Prisma.
d) Rotierende Anordnungen: Zusätzlich zu den oben unter a) angegebenen Nachteilen ist hier die Beschränkung der Meßgeschwindigkeit aufgrund der geringen Drehgeschwindigkeit als Nachteil zu erwähnen.

Aufgabe der Erfindung ist es also, eine Vorrichtung zur Erzeugung von mehreren Sekundärlichtstrahlen aus einem Primärlichtstrahl anzugeben, die die obigen Nachteile nicht mehr aufweist und die Sekundärlichtstrahlen liefert, welche alle die gleiche spektrale Verteilung besitzen und daher für eine Auswertung des Primärlichtstrahls in einem Mehrwellenlängenpyrometer besonders geeignet sind.

Erfindungsgemäß ist diese Vorrichtung dadurch gekennzeichnet, daß der Primärlichtstrahl durch eine Sammeloptik auf ein Eingangsfenster in einer Hohlkugel fokussiert wird, daß die Hohlkugelinnenwand mit einer diffusreflektierenden Schicht bedeckt ist und daß über die Kugelfläche verteilt Fenster für den Austritt der Sekundärlichtstrahlen vorgesehen sind.

Bezüglich von Merkmalen bevorzugter Ausführungsformen der Erfindung wird auf die Unteransprüche verwiesen.

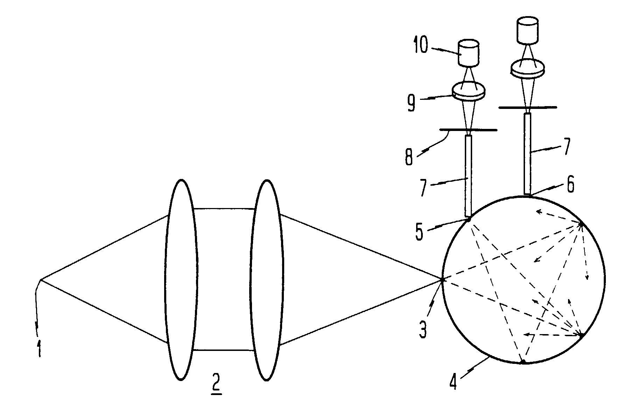

Nachfolgend wird die Erfindung anhand eines bevorzugten Ausführungsbeispiels mit Hilfe der einzigen Figur erläutert, die schematisch die erfindungsgemäße Vorrichtung zeigt.

Der Primärlichtstrahl geht von einer Quelle 1 aus und wird von einer achromatischen Sammeloptik 2 auf ein Eingangsfenster 3 einer Hohlkugel 4 gerichtet. Die Sammeloptik braucht nicht unbedingt perfekt achromatisch zu sein, da eine Spektralverschiebung in dieser Sammeloptik alle Sekundärlichtstrahlen in gleicher Weise verändert. Die Hohlkugel 4 ist innen mit einer diffusreflektierenden weißen Schicht bedeckt, so daß sich das vom Eingangsfenster 3 kommende Licht gleichmäßig in der Kugel 4 verteilt. Die Größe des Eingangsfensters 3 ist unkritisch und kann so gewählt sein, daß alles von der Sammeloptik 2 kommende Licht in die Kugel eintritt.

Über den Teil der Kugelfläche, der nicht unmittelbar vom Primärlichtstrahl getroffen wird, sind mehrere Austrittsfenster 5 und 6 verteilt angeordnet, von denen nur zwei dargestellt sind. Die durch ein Austrittsfenster austretenden Photonen werden in je einem Lichtleitstab 7 gebündelt, der unmittelbar auf das Austrittsfenster aufgesetzt ist und dessen Durchmesser gleich dem des Austrittsfensters gewählt ist. Am anderen Ende wird das austretende Licht einem Interferenzfilter 8 zugeführt, das die jeweils zu analysierende Wellenlänge selektiert, und gelangt dann durch eine Sammellinse 9 gesammelt zu einer Fotodiode 10, die die Intensität des Lichts der ausgewählten Wellenlänge mißt. Die in einem Pyrometer üblicherweise nachgeordneten Auswertekreise haben mit der vorliegenden Erfindung nichts zu tun und wurden weggelassen.

Die Kugel hat beispielsweise einen Durchmesser von 10 cm, und die im Handel erhältlichen weißen Beschichtungen mit hoher diffuser Reflexion ergeben eine Reflektivität von mehr als 0,97 im sichtbaren und infraroten Lichtspektrum. Die Anzahl der für ein Mehrwellenlängenpyrometer erforderlichen Austrittsfenster liegt in der Regel unter 10, so daß das Verhältnis zwischen der Gesamtfläche aller Fenster und der Gesamtinnenfläche der Kugel einen sehr kleinen Wert ergibt. Das Verhältnis der gesamten durch die Austrittsfenster austretenden Lichtenergie zu der am Eintrittsfenster 3 in die Kugel eintretenden Lichtenergie ist daher verhältnismäßig groß, in der Größenordnung von 0,4.

Es ist durchaus möglich, daß aufgrund der Fertigungstoleranzen der Austrittsfenster bzw. der jedem dieser Fenster nachgeordneten Bauteile die Sekundärlichtstrahlen nicht die gewünschte gleiche Intensität besitzen. Dieser Nachteil kann aber durch eine einmalige Eichung kompensiert werden. Für spätere Temperaturmessungen sind dagegen keine Nacheichungen erforderlich.

Wenngleich die erfindungsgemäße Vorrichtung für ein Sechswellenlängenpyrometer entworfen wurde, das Lichtwellenlängen zwischen 500 und 1800 Nanometer auswertet, so ist die erfindungsgemäße Vorrichtung doch auch auf anderen Gebieten mit Vorteil anwendbar, bei denen es darauf ankommt, einen Lichtstrahl ohne Veränderung seines Spektrums in Sekundärstrahlen aufzuteilen. Zwischen 800 und 4000 K wurden damit Temperaturmessungen in dem Sechswellenlängenpyrometer mit einer Genauigkeit von etwa 0,5% durchgeführt.

## Patentansprüche

1. Vorrichtung zur Erzeugung von mehreren Sekundärlichtstrahlen aus einem Primärlichtstrahl, insbesondere für ein wellenlängenpyrometer, dadurch gekennzeichnet, daß der lichtstrahl (1) durch eine Sammeloptik (2) auf ein Eingangsfenster (3) in einer Hohlkugel (4) fokussiert wird, daß die Hohlkugelinnenwand mit einer diffusreflektierenden Schicht bedeckt ist und daß über die Kugelfläche verteilt Fenster (5, 6) für den Austritt der Sekundärlichtstrahlen vorgesehen sind.

2. Vorrichtung nach Anspruch 1, dadurch gekennzeichnet, daß die Sekundärlichtstrahlen jenseits des zugeordneten Fensters in Lichtleitstäben (7) geführt werden.

3. Vorrichtung nach Anspruch 2, dadurch gekennzeichnet, daß die Sekundärlichtstrahlen jenseits der Lichtleitstäbe durch je ein Interferenzfilter (8) geführt werden.

## Claims

1. A device for producing several secondary light beams from a primary light beam, in particular for a multiwavelengths pyrometer, characterized in that the primary light beam (1) is focused through a convergent optical system (2) onto an inlet window (3) in a hollow sphere (4), that the inner wall of the hollow sphere is covered by a diffusely reflecting layer and that windows (5, 6) are distributed over the wall of the sphere for allowing the secondary light beams to emerge.

2. A device according to claim 1, characterized in that on the other side of each respective window, the secondary light beams are guided in optical rods (7).

3. A device according to claim 2, characterized in that each secondary light beam emerging from the optical rods passes through a respective interference filter (8).

## Revendications

1. Dispositif pour la réalisation d'une pluralité de faisceaux de lumière secondaires à partir d'un faisceau de lumière primaire, en particulier pour un pyromètre à plusieurs longueurs d'onde, caractérisé par le fait que le faisceau de lumière primaire (1) est focalisé par un système optique convergent (2) sur une fenêtre d'entrée (3) prévue dans une sphère creuse (4), que la paroi intérieure de la sphère creuse est couverte d'une couche réfléchissant de façon diffuse et qu'on prévoit des fenêtres (5, 6) réparties sur la surface de la sphère pour la sortie des faisceaux de lumière secondaires.

2. Dispositif selon la revendication 1, caractérisé par le fait les faisceaux de lumière secondaires sont guidés au-delà de la fenêtre associée dans des guides optiques (7) en forme de tige.

3. Dispositif selon la revendication 2, caractérisé par le fait que les faisceaux de lumière secondaires au-delà des guides optiques en forme de tige traversent un filtre d'interférence (8).
